# EUROPEAN PATENT SPECIFICATION

(11) **EP 3 113 267 B1**
(45) Date of publication and mention of the grant of the patent: **17.04.2019**
(21) Application number: 15754622.7
(22) Date of filing: 25.02.2015
(51) Int. Cl.: H01M 8/04, H01M 8/10, H01M 8/12

(54) **ELECTRICITY-GENERATION SYSTEM AND METHOD FOR OPERATING ELECTRICITY-GENERATION SYSTEM**
STROMERZEUGUNGSSYSTEM UND VERFAHREN ZUM BETREIBEN DES STROMERZEUGUNGSSYSTEMS
SYSTÈME DE GÉNÉRATION D'ÉLECTRICITÉ ET PROCÉDÉ PERMETTANT D'ACTIONNER UN SYSTÈME DE GÉNÉRATION D'ÉLECTRICITÉ

(30) Priority: 27.02.2014 JP 2014036327
(43) Date of publication of application: 04.01.2017
(73) Proprietor: Panasonic Intellectual Property Management Co., Ltd., Osaka-shi, Osaka 570-6207 (JP)
(72) Inventor: YAMAGUCHI, Shohei, Osaka-shi, Oksaka 540-6207 (JP); TATSUI, Hiroshi, Osaka-shi, Oksaka 540-6207 (JP)
(74) Representative: Grünecker Patent- und Rechtsanwälte PartG mbB
(86) International application number: PCT/JP2015/000947
(87) International publication number: WO 2015/129261

(56) References cited:
- WO-A1-2012/081220
- WO-A1-2012/153482
- JP-A- 2009 014 473
- JP-A- 2009 070 747
- JP-A- 2009 211 972
- US-A1- 2005 058 861
- US-A1- 2011 212 375

## Description

### TECHNICAL FIELD

The present invention relates to a power system for supplying heat and electricity, and particularly relates to a structure and an operation method of the power system.

### BACKGROUND ART

A cogeneration system can supply generated power to a customer so as to provide a power load for the customer, and can collect and accumulate waste heat resulting from power generation so as to provide a hot water supply load for the customer.

As this cogeneration system, a cogeneration system is known in which a fuel cell system and a water heater are operated by using the same fuel (for example, refer to PTL 1).

The cogeneration system disclosed in PTL 1 has the fuel cell system, a heat exchanger for collecting heat generated by the operation of the fuel cell system, a storage tank for storing water heated after being circulated in the heat exchanger, and the water heater having a function to heat water flowing out from the storage tank up to a predetermined temperature. The fuel cell system and the water heater are configured to be operated by using the same fuel.

This fuel cell system generates power by using hydrogen. Therefore, the hydrogen and raw material gas for a hydrogen generator to generate the hydrogen flow in an internal pipe of the fuel cell system.

In order to ensure equipment safety even when the gases leak from the pipe, a configuration has been proposed in which the equipment internally has a combustible gas detection sensor and a ventilation fan. When the combustible gas detection sensor detects combustible gas, the ventilation fan is operated so as to discharge the combustible gas inside the equipment outward from the equipment (for example, refer to PTL 2).

A configuration has been proposed in which a power system provided with improved ventilation performance is disposed inside a building (for example, refer to PTL 3).

The power system disclosed in PTL 3 is used by being installed inside the building provided with an air intake port, and includes an air inlet for introducing air inside the building into the fuel cell system, an air discharge pipe for discharging the air inside the fuel cell system outward from the building, and a ventilator. The ventilator introduces the air present outside the building into the building via the air intake port, further introduces the air into the fuel cell system through the air inlet, and further discharges the air outward from the building through the air discharge pipe.

A configuration has also been proposed in which a vertically extending duct is used so as to improve performance for ventilating exhaust gas generated by the power system disposed inside the building (for example, refer to PTL 4).

According to the power system disclosed in PTL 4, the duct which vertically extends inside the building and whose upper end portion is located outside includes a double pipe. A ventilation pipe and an exhaust pipe are respectively connected to the duct so as to allow the exhaust gas and the air to respectively and separately flow through the inside or the outside of the duct.

A configuration will be described which has the ventilation fan, the fuel cell, and the fuel cell system having the hydrogen generator for supplying the fuel gas to the fuel cell as disclosed in PTL1, PTL3, and PTL 4. An air discharge passage is disposed to communicate with the water heater (combustion apparatus), and the exhaust gas is exhausted outward from the building. According to this configuration, for example, when the fuel system is stopped and the combustion apparatus is operated in a state where the ventilation fan is not operated, there is a possibility that the combustion exhaust gas having low oxygen concentration in the combustion apparatus may reversely flow through the air discharge passage and may flow into and stay inside a housing of the fuel cell system. Consequently, when the fuel cell system subsequently generates power, the air having low oxygen concentration is supplied to a fuel cell cathode, thereby degrading fuel cell efficiency.

In order to prevent the exhaust gas in the combustion apparatus from flowing into the fuel cell system through the air discharge passage in this way, a configuration has been proposed in which a reverse flow prevention device (check valve) is disposed in the air discharge passage (for example, refer to PTL 5). The reverse flow prevention device adopts a configuration in which a valve body moves away from a valve seat so as to allow the gas to flow in a direction toward an opening of the discharge passage from the housing. The reverse flow prevention device adopts a configuration in which the valve body comes into contact with the valve seat so as to hinder the gas from flowing in the direction toward the housing from the opening of the discharge passage. The reverse flow prevention device is disposed so as to prevent the exhaust gas discharged from the combustion apparatus from flowing into the housing.

However, even according to the configuration having this reverse flow prevention device, it is conceivable that a small amount of the exhaust gas in the combustion apparatus reversely flows into the housing of the fuel cell system.

In this case, the exhaust gas in the combustion apparatus flows little by little into the housing. The combustible gas detection sensor disposed inside the fuel cell system is exposed for a long time due to the combustible gas contained in the exhaust gas (in some cases, the combustible gas is contained when unburned gas is mixed with the exhaust gas during ignition), thereby causing a possibility that normal detection may be no longer available due to sensitivity variations of the combustible gas detection sensor.

In spite of the fact that the combustible gas does not leak from the pipe of the fuel cell system, the combustible gas detection sensor detects the combustible gas contained in a small amount of the exhaust gas flowing into the housing, thereby causing a possibility of erroneous recognition that the combustible gas leaks from the pipe.

### Citation List

### Patent Literature

PTL 1: Japanese Patent Unexamined Publication No. 2007-248009
PTL 2: Japanese Patent Unexamined Publication No. 2009-70747
PTL 3: Japanese Patent Unexamined Publication No. 2006-73446
PTL 4: Japanese Patent Unexamined Publication No. 2008-210631
PTL 5: Pamphlet of International Publication No. WO2012/153482

### SUMMARY OF THE INVENTION

The present invention is made in view of the above-described circumstances, and aims to provide a power system and an operation method thereof which can prevent sensitivity variations of a combustible gas detection sensor.

The present invention aims to provide a power system and an operation method thereof which can prevent a combustible gas detection sensor from detecting combustible gas contained in a small amount of exhaust gas flowing into a housing and causing a possibility of erroneous recognition that the combustible gas leaks from the pipe, in spite of the fact that the combustible gas does not leak from the pipe of a fuel cell system.

According to the present invention, there is provided a power system as defined in claim 1.

According to the present invention, there is provided an operation method of a power system as defined in claim 2.

According to the above-described configuration and method, while the air discharger is stopped which discharges the air inside the fuel cell system to the atmosphere through the discharge passage, when the combustible gas detection sensor continuously detects that the combustible gas having the first concentration or higher concentration is present inside the housing for accommodating the fuel cell during the first period of time, or in every predetermined period, the controller operates the air discharger. Accordingly, the exhaust gas of the combustion apparatus which stays inside the housing after reversely flowing in the discharge passage and the exhaust gas reversely flowing into the housing can be immediately discharged outward from the housing. In this manner, it is possible to prevent sensitivity variations of the combustible gas detection sensor which are caused by the combustible gas detection sensor being exposed for a long time to the combustible gas contained in the exhaust gas.

Based on the combustible gas detection sensor's detection of the combustible gas having the predetermined concentration or higher concentration inside the housing, the controller determines an abnormal state of the power system (for example, abnormality of the combustible gas leaking from the pipe inside the housing of the fuel cell system) or gives a notification of the abnormality, after continuously detecting that the combustible gas having the first concentration or higher concentration is present inside the housing during the first period of time, or the air discharger is operated in every predetermined period, when the combustible gas detection sensor continuously detects the combustible gas having the second concentration or higher concentration inside the housing during the second period of time. In this manner, it is possible to prevent the combustible gas detection sensor from detecting combustible gas contained in a small amount of exhaust gas flowing into the housing and causing a possibility of erroneous recognition that the combustible gas leaks from the pipe, in spite of the fact that the combustible gas does not leak from the pipe of the fuel cell system.

As described above, according to the present invention, it is possible to prevent sensitivity variations of the combustible gas detection sensor by causing a small amount of exhaust gas reversely flowing into the housing of the fuel cell system to be discharged outward. In addition, it is possible to prevent the combustible gas detection sensor from detecting combustible gas contained in a small amount of exhaust gas flowing into the housing and causing a possibility of erroneous recognition that the combustible gas leaks from the pipe, in spite of the fact that the combustible gas does not leak from the pipe of the fuel cell system.

### BRIEF DESCRIPTION OF DRAWINGS

FIG. 1 is a schematic view illustrating a schematic configuration of a power system according to an exemplary embodiment of the present invention.
FIG. 2 is a flowchart schematically illustrating a driving operation in a fuel cell system of the power system according to the exemplary embodiment of the present invention.
FIG. 3 is a flowchart schematically illustrating a driving operation in a fuel cell system of a power system according to a first modification example of the exemplary embodiment in the present invention.
FIG. 4 is a flowchart schematically illustrating a driving operation in a fuel cell system of a power system according to a second modification example of the exemplary embodiment in the present invention.
FIG. 5 is a flowchart schematically illustrating a driving operation in a fuel cell system of a power system according to a third modification example of the exemplary embodiment in the present invention.
FIG. 6 is a flowchart schematically illustrating a driving operation in a fuel cell system of a power system according to a fourth modification example of the exemplary embodiment in the present invention.

### DESCRIPTION OF EXEMPLARY EMBODIMENT

Hereinafter, a preferred exemplary embodiment according to the present invention will be described with reference to the drawings. In all of the drawing, the same reference numerals will be given to the same or equivalent elements, and repeated description thereof will be omitted. In all of the drawings, only configuration elements needed to describe the present invention are selectively illustrated, and other configuration elements are omitted in the illustration. Furthermore, the present invention is not limited to the following exemplary embodiment.

### (Exemplary embodiment)

### [Configuration of Power System]

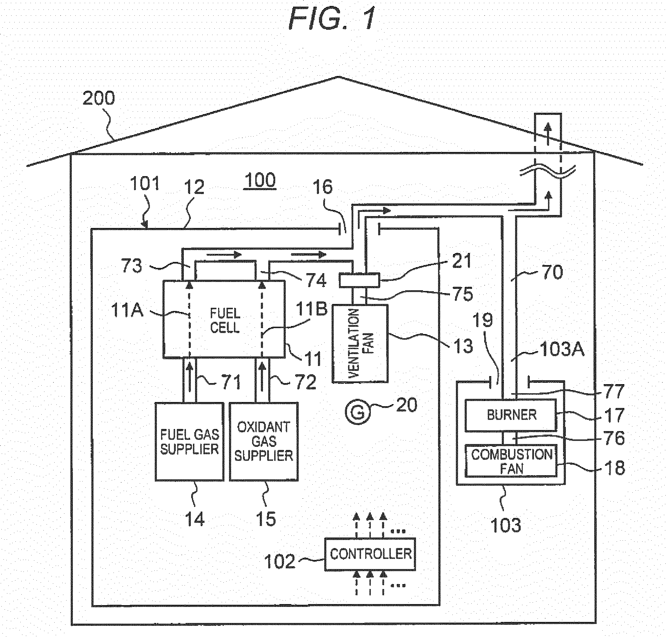

FIG. 1 is a schematic view illustrating a schematic configuration of power system 100 according to an exemplary embodiment of the present invention.

As illustrated in FIG. 1, power system 100 according to the present exemplary embodiment is disposed inside building 200.

Power system 100 includes fuel cell system 101 having fuel cell 11, housing 12, ventilation fan 13 (an example of an air discharger), reverse flow prevention device 21, and combustible gas detection sensor 20, controller 102, combustion apparatus 103, and discharge passage 70. Here, discharge passage 70 is disposed so as to cause housing 12 of fuel cell system 101 and air outlet 103A of combustion apparatus 103 to communicate with (be connected to) each other.

The present exemplary embodiment adopts a configuration in which power system 100 is disposed inside building 200, but the present invention is not limited thereto. For example, as long as discharge passage 70 is disposed so as to cause housing 12 of fuel cell system 101 and air outlet 103A of combustion apparatus 103 to communicate with each other, a configuration may be adopted in which power system 100 is disposed outside building 200.

Fuel cell 11, ventilation fan 13, fuel gas supplier 14, oxidant gas supplier 15, combustible gas detection sensor 20, and reverse flow prevention device 21 are disposed inside housing 12 of fuel cell system 101. Controller 102 is also disposed inside housing 12.

The present exemplary embodiment adopts a configuration in which controller 102 is disposed inside housing 12 of fuel cell system 101, but the present invention is not limited thereto. For example, a configuration may be adopted in which controller 102 is disposed inside combustion apparatus 103. Alternatively, a configuration may be adopted in which controller 102 is disposed separately from fuel cell system 101 and combustion apparatus 103.

A hole penetrating a wall in the thickness direction is disposed in a proper place on the wall configuring housing 12. A pipe configuring discharge passage 70 is inserted into the hole so as to have a gap therebetween. The gap between the hole and discharge passage 70 configures air inlet 16. According to this configuration, air outside power system 100 is supplied into housing 12 via air inlet 16.

The present exemplary embodiment adopts a configuration in which the hole for inserting the pipe configuring discharge passage 70 and the hole configuring air inlet 16 are the same hole, but the present invention is not limited to this configuration. For example, the hole for inserting the pipe configuring discharge passage 70 and the hole configuring air inlet 16 may be separately disposed in housing 12. Air inlet 16 may be configured to include one hole of housing 12, or may be configured to include multiple holes.

Fuel gas supplier 14 may adopt any configuration as long as fuel gas (for example, hydrogen gas) can be supplied to fuel cell 11 while a flow rate thereof is controlled. For example, the configuration may employ equipment configured to supply hydrogen gas, such as a hydrogen generator, a hydrogen cylinder, or a hydrogen-absorbing alloy. Fuel cell 11 (to be more precise, an inlet of fuel gas passage 11A of fuel cell 11) is connected to fuel gas supplier 14 via fuel gas supply passage 71.

Oxidant gas supplier 15 may adopt any configuration as long as oxidant gas (for example, air) can be supplied to fuel cell 11 while a flow rate thereof is controlled. For example, oxidant gas supplier 15 may be configured to include a fan or various types of fans such as a blower. Fuel cell 11 (to be more precise, an inlet of oxidant gas passage 11B of fuel cell 11) is connected to oxidant gas supplier 15 via oxidant gas supply passage 72.

Fuel cell 11 has an anode and a cathode. In fuel cell 11, the fuel gas supplied to fuel gas passage 11A is supplied to the anode while the fuel gas flows through fuel gas passage 11A. The oxidant gas supplied to oxidant gas passage 11B is supplied to the cathode while the oxidant gas flows through oxidant gas passage 11B. The fuel gas supplied to the anode and the oxidant gas supplied to the cathode reacts to each other so as to generate electricity and heat.

The generated electricity is supplied to an external power load (for example, household electric appliances) by a power regulator. The generated heat is collected by a heat medium flowing through a heat medium passage. The heat collected by the heat medium can be used in heating water, for example.

According to the present exemplary embodiment, as fuel cell 11, it is possible to use various fuel cells selected from polymer electrolyte fuel cells, direct internal reforming solid oxide fuel cells, indirect internal reforming solid oxide fuel cells.

The present exemplary embodiment adopts an aspect where fuel cell 11 and fuel gas supplier 14 are separately configured, but the present invention is not limited thereto. For example, fuel gas supplier 14 and fuel cell 11 may be integrally configured as in a solid oxide fuel cell. In this case, fuel cell 11 and fuel gas supplier 14 are configured as one unit covered with a heat insulator used in common. The configuration of fuel cell 11 is the same as the configuration of the general fuel cell, and thus, detailed description thereof will be omitted.

An upstream end of off-fuel gas passage 73 is connected to an outlet of fuel gas passage 11A. A downstream end of off-fuel gas passage 73 is connected to discharge passage 70. An upstream end of off-oxidant gas passage 74 is connected to an outlet of oxidant gas passage 11B. A downstream end of off-oxidant gas passage 74 is connected to discharge passage 70.

According to this configuration, the fuel gas which is not used in fuel cell 11 (hereinafter, referred to as off-fuel gas) is discharged from the outlet of fuel gas passage 11A to discharge passage 70 via off-fuel gas passage 73. When fuel cell system 101 is configured to supply the fuel gas to fuel cell 11 after reforming raw material gas, a configuration may be adopted in which the off-fuel gas is burnt in a burner (not illustrated) inside fuel cell system 101 in order to supply heat for performing reforming reaction.

Oxidant gas which is not used in fuel cell 11 (hereinafter, referred to as off-oxidant gas) is discharged from the outlet of oxidant gas passage 11B to discharge passage 70 via off-oxidant gas passage 74. The off-fuel gas discharged to discharge passage 70 is discharged outward from building 200 after being diluted by the off-oxidant gas.

Ventilation fan 13 is connected to discharge passage 70 via ventilation passage 75. According to this configuration, air outside fuel cell system 101 is supplied into housing 12 through air inlet 16. Accordingly, ventilation fan 13 is operated so as to discharge gas (mainly, air) inside housing 12 outward from building 200 via ventilation passage 75 and discharge passage 70. Thus, ventilation is performed inside housing 12.

The present exemplary embodiment employs ventilation fan 13 as the air discharger, but the present invention is not limited this example. As long as the ventilation can be performed inside housing 12, the air discharger may adopt any configuration. For example, a blower may be employed.

A configuration is adopted in which ventilation fan 13 is disposed inside housing 12, but the present invention is not limited to this example. For example, a configuration may be adopted in which ventilation fan 13 is disposed inside discharge passage 70. In this case, it is preferable that ventilation fan 13 is disposed on an upstream side further from a bifurcated site of discharge passage 70.

In the present exemplary embodiment, an example has been described in which reverse flow prevention device 21 is installed in ventilation passage 75 inside housing 12, but the present invention is not limited thereto. Reverse flow prevention device 21 is installed in order to prevent exhaust gas of combustion apparatus 103 from reversely flowing into housing 12 when combustion apparatus 103 is operated in a state where ventilation fan 13 is not operated. Therefore, reverse flow prevention device 21 may be installed in discharge passage 70. In this case, it is necessary to install reverse flow prevention device 21 in a section from the downstream end of ventilation passage 75 to the bifurcated site of discharge passage 70 in discharge passage 70. As long as this installation is available, reverse flow prevention device 21 may be installed inside housing 12, or may be installed outside housing 12.

Reverse flow prevention device 21 can be configured to include various check valves selected from lift-type check valves, swing-type check valves, ball-type check valves, and diaphragm-type check valves. In any configuration, when ventilation fan 13 is operated, reverse flow prevention device 21 is brought into an "open" state by the pressing pressure. When ventilation fan 13 is not operated, reverse flow prevention device 21 is brought into a "closed" state.

According to this configuration, reverse flow prevention device 21 can prevent the exhaust gas of combustion apparatus 103 from reversely flowing into housing 12 when combustion apparatus 103 is operated in a state where ventilation fan 13 is not operated. However, even when reverse flow prevention device 21 adopting any one of these configurations is used, it is not possible to completely prevent the reverse flowing, and a small amount of exhaust gas reversely flows in normal cases.

As long as the combustible gas inside housing 12 can be detected, combustible gas detection sensor 20 may employ any type. For example, it is possible to employ a detection element of each type selected from a semiconductor type, a contact combustion type, a controlled potential electrolysis type, and a galvanic battery type.

Combustible gas detection sensor 20 may be disposed at any location inside housing 12 as long as combustible gas detection sensor 20 can detect combustible gas which leaks from the gas pipe inside housing 12 or which flows from discharge passage 70. The present exemplary embodiment provides an example where combustible gas detection sensor 20 is disposed in the vicinity of ventilation fan 13.

Combustion apparatus 103 has burner 17 and combustion fan 18 serving as a combustion air supplier. Burner 17 and combustion fan 18 are connected to each other via combustion air supply passage 76. As long as combustion air can be supplied to burner 17, combustion fan 18 may adopt any configuration. For example, combustion fan 18 may be configured to include a fan or various types of fans such as a blower.

Combustible gas such as natural gas or combustion fuel such as liquid fuel including kerosene is supplied to burner 17 from a combustion fuel supplier. The combustion air supplied from combustion fan 18 and the combustion fuel supplied from the combustion fuel supplier are burnt in burner 17 so as to generate heat, thereby generating combustion exhaust gas. The generated heat can be used in heating water. That is, combustion apparatus 103 may be used as a boiler.

The upstream end of exhaust gas passage 77 is connected to burner 17, and the downstream end of exhaust gas passage 77 is connected to discharge passage 70. According to this configuration, the combustion exhaust gas generated in burner 17 is discharged to discharge passage 70 via exhaust gas passage 77. That is, the combustion exhaust gas generated in burner 17 is discharged to discharge passage 70 as exhaust gas discharged from combustion apparatus 103. The combustion exhaust gas discharged to discharge passage 70 is discharged outward from building 200 after flowing through discharge passage 70.

A hole penetrating a wall in the thickness direction is disposed in a proper place on the wall configuring combustion apparatus 103. A pipe configuring discharge passage 70 is inserted into the hole so as to have a gap therebetween. The gap between the hole of combustion apparatus 103 and discharge passage 70 configures air inlet 19. According to this configuration, air outside power system 100 is supplied into combustion apparatus 103 via air inlet 19.

Discharge passage 70 is bifurcated in this way, and two upstream ends are respectively connected to the hole of housing 12 and the hole of combustion apparatus 103. Discharge passage 70 is formed so as to extend to the outside of building 200, and a downstream end (opening) thereof is open to the atmosphere. According to this configuration, discharge passage 70 causes housing 12 and air outlet 103A of combustion apparatus 103 to communicate with each other.

The present exemplary embodiment adopts a configuration in which the hole for inserting the pipe configuring discharge passage 70 and the hole configuring air inlet 19 are the same hole, but the present invention is not limited to this example. The hole for inserting (connecting) the pipe configuring discharge passage 70 and the hole configuring air inlet 19 may be separately disposed in combustion apparatus 103. Air inlet 19 may be configured to include one hole in combustion apparatus 103, or may be configured to include multiple holes.

Controller 102 may employ any configuration form of devices as long as the device controls each device configuring power system 100.

Controller 102 includes an arithmetic processing unit such as a microprocessor and a central processing unit (CPU), and a storage unit configured to include a memory storing a program for executing various control operations. Controller 102 reads a predetermined control program stored in the storage unit by the arithmetic processing unit, and executes the program, thereby processing information therein and performing not only information controls but also various controls relating to power system 100.

Controller 102 may adopt not only a configuration form including a single controller, but also a configuration form including a controller group for controlling power system 100 in cooperation with multiple controllers.

Controller 102 may be configured to include a microcontroller, or may be configured to include a micro processing unit (MPU), a programmable logic controller (PLC), or a logic circuit.

In the present exemplary embodiment, a configuration in which controller 102 is disposed inside housing 12 of fuel cell system 101 has been described as an example, but the present invention is not limited thereto. For example, controller 102 may be disposed outside housing 12 of fuel cell system 101, or may be disposed inside combustion apparatus 103.

Furthermore, a configuration may be adopted in which controller 102 is disposed by being separately divided into housing 12 of fuel cell system 101 and combustion apparatus 103. In this case, controllers 102 divided and disposed inside housing 12 of fuel cell system 101 and combustion apparatus 103 may be configured to control devices respectively configuring fuel cell system 101 and combustion apparatus 103. Controller 102 divided and disposed inside housing 12 of fuel cell system 101 may be configured to control not only fuel cell system 101 but also any one or more devices of the respective devices configuring power system 100 in addition to fuel cell system 101.

Controller 102 divided and disposed inside combustion apparatus 103 may be similarly configured to control any one or more devices of the respective devices configuring power system 100 in addition to combustion apparatus 103.

Controllers 102 divided and disposed inside housing 12 of fuel cell system 101 and combustion apparatus 103 may respectively have a communication unit, and may be configured to exchange signals therebetween via the arithmetic processing units and the communication units of both controllers 102.

For example, a communication medium for connecting both controllers 102 divided and disposed inside housing 12 of fuel cell system 101 and combustion apparatus 103 may be wireless local area network (wireless LAN), wired local area network, wide area network, public communication, the Internet, or commercial network.

### [Operation of Power System]

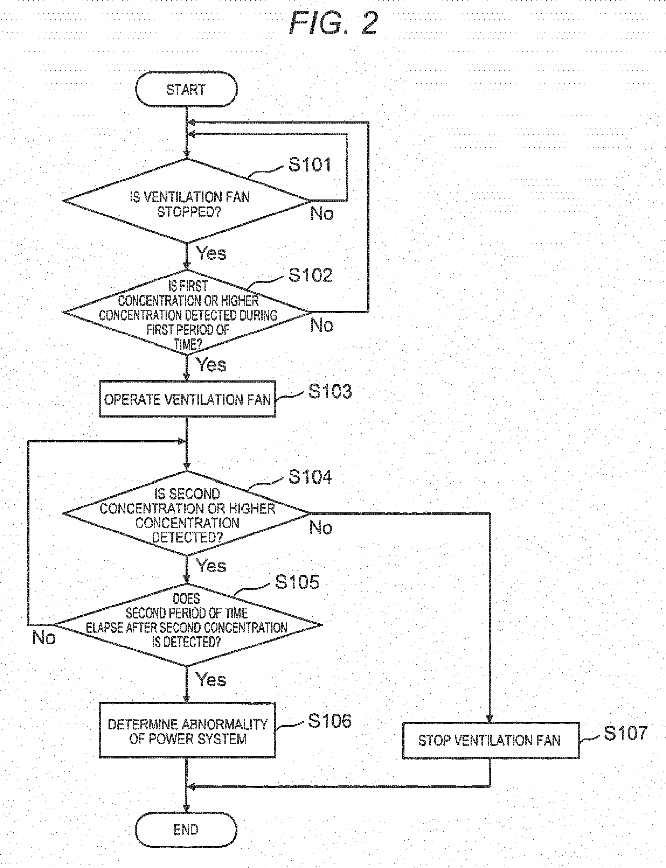

Next, an operation of power system 100 according to the present exemplary embodiment will be described with reference to FIGS. 1 and 2.

A power generating operation in fuel cell system 101 of power system 100 is performed similarly to a power generating operation in the general fuel cell system, and thus, detailed description thereof will be omitted. In the present exemplary embodiment, a case will be described where controller 102 is configured to be a single controller and controller 102 controls each device configuring power system 100.

FIG. 2 is a flowchart schematically illustrating a driving operation in fuel cell system 101 of power system 100 according to the exemplary embodiment of the present invention.

As illustrated in FIG. 2, controller 102 confirms whether or not ventilation fan 13 is stopped (S101). When ventilation fan 13 is not stopped (S101, No), controller 102 repeatedly performs the process in Step S101 until ventilation fan 13 is stopped. On the other hand, when ventilation fan 13 is stopped (S101, Yes), controller 102 causes the process to proceed to Step S102.

A case where ventilation fan 13 is in operation includes a case where ventilation fan 13 is operated to ventilate the inside of housing 12 in response to the power generating operation performed by fuel cell system 101, and a case where ventilation fan 13 is operated to ventilate the inside of housing 12 irrespective of whether or not fuel cell system 101 performs the power generating operation.

In Step S102, when combustible gas detection sensor 20 does not detect combustible gas having first concentration or higher concentration during a first period of time (S102, No), controller 102 causes the process to return to Step S101. The processes in Step S101 and Step S102 are repeatedly performed while ventilation fan 13 is stopped and until combustible gas detection sensor 20 detects the combustible gas having the first concentration or higher concentration during the first period of time (S102, Yes).

In this case, controller 102 may repeatedly perform the process in Step S102 until combustible gas detection sensor 20 detects a combustible gas detection signal.

On the other hand, when combustible gas detection sensor 20 detects the combustible gas having the first concentration or higher concentration during the first period of time (S102, Yes), the process proceeds to Step S103. When combustible gas detection sensor 20 detects the combustible gas having the first concentration or higher concentration in Step S102, controller 102 may immediately cause the process to proceed to Step S103. That is, the first period of time may be an instantaneous period.

In Step S103, controller 102 operates ventilation fan 13. In this case, it is preferable that controller 102 controls ventilation fan 13 so that the exhaust gas discharged from combustion apparatus 103 does not flow into housing 12 and so that static pressure of ventilation fan 13 becomes greater than discharge pressure generated when combustion fan 18 is operated.

Next, in Step S104, controller 102 confirms whether or not detected concentration of combustible gas detection sensor 20 is second concentration or higher concentration. In Step S104, when the detected concentration of combustible gas detection sensor 20 is lower than the second concentration (S104, No), controller 102 stops ventilation fan 13 in Step S107.

On the other hand, when combustible gas detection sensor 20 detects the combustible gas having the second concentration or higher concentration (S104, Yes), controller 102 causes the process to proceed to Step S105, and confirms whether or not a second period of time elapses after combustible gas detection sensor 20 detects the combustible gas having the second concentration or higher concentration in Step S104.

In Step S105, when the second period of time does not elapse after combustible gas detection sensor 20 detects the combustible gas having the second concentration or higher concentration in Step S104 (S105, No), controller 102 causes the process to return to Step S104, and confirms whether or not the concentration of the combustible gas detected by combustible gas detection sensor 20 is the second concentration or higher concentration.

In this case, when the concentration of the combustible gas detected by combustible gas detection sensor 20 is the second concentration or higher concentration, in Step S105, controller 102 confirms again whether or not the second period of time elapses after the combustible gas having the second concentration or higher concentration is detected. In this case, a starting point of the second period of time is a point of time when the combustible gas having the second concentration or higher concentration is detected for the first time. That is, the second period of time is a period while the combustible gas having the second concentration or higher concentration is continuously detected.

When the second period of time elapses after the combustible gas having the second concentration or higher concentration is detected (S105, Yes), in Step S106, controller 102 determines that power system 100 is abnormal. Here, as the reason for determining that power system 100 is abnormal, it is conceivable that the combustible gas leaks from the gas pipe inside housing 12.

In Step S106, controller 102 performs controlling for determining whether power system 100 is abnormal, but the present invention is not limited thereto. For example, controller 102 may perform a control for giving a notification that power system 100 is in an abnormal state.

The first concentration in Step S102 and the second concentration in Step S104 may be the same concentration, or may be mutually different concentration.

For example, the first concentration and the second concentration are the same concentration, when only two states are indicated, such as a detection state where combustible gas detection sensor 20 detects the combustible gas having predetermined concentration or higher concentration and a non-detection state where combustible gas detection sensor 20 does not detect the combustible gas having concentration lower than the predetermined concentration.

On the other hand, when combustible gas detection sensor 20 indicates three or more states of the combustion gas concentration, or when combustible gas detection sensor 20 can continuously indicate the combustion gas concentration, the first concentration in Step S102 and the second concentration in Step S104 may be set to be the same concentration, or may be set to be mutually different concentration. When the mutually different concentration is set, the first concentration may be set to be lower than the second concentration, or may be set to be higher than the second concentration.

As described above, in power system 100 according to the present exemplary embodiment, when combustion apparatus 103 is operated while ventilation fan 13 is stopped, reverse flow prevention device 21 detects the combustible gas contained in a small amount of exhaust gas reversely flowing from combustion apparatus 103, and operates ventilation fan 13. In this manner, the exhaust gas of combustion apparatus 103 which stays inside housing 12 and the exhaust gas reversely flowing into housing 12 can be immediately discharged outward from housing 12.

When combustible gas detection sensor 20 detects the combustible gas even though air inside housing 12 is discharged, controller 102 determines that power system 100 is in an abnormal state (for example, abnormality of the combustible gas leaking from the pipe located inside housing 12 of fuel cell system 101), or gives a notification of the abnormal state.

According to this configuration, power system 100 according to the present exemplary embodiment discharges out a small amount of exhaust gas reversely flowing from reverse flow prevention device 21 into housing 12 of fuel cell system 101. Accordingly, it is possible to prevent sensitivity variations of combustible gas detection sensor 20.

According to this configuration, it is possible to prevent the combustible gas detection sensor from erroneously recognizing that the combustible gas leaks from the gas pipe when the combustible gas detection sensor detects the combustible gas contained in a small amount of exhaust gas flowing into housing 12, in spite of the fact that the combustible gas does not leak from the gas pipe inside housing 12 of fuel cell system 101.

In the present exemplary embodiment, an example has been described in which discharge passage 70, off-fuel gas passage 73, off-oxidant gas passage 74, and exhaust gas passage 77 are respectively different passages, but the present invention is not limited to this example. The passages may be collectively construed as discharge passage 70.

### [First Modification Example]

Next, a first modification example of power system 100 according to the present exemplary embodiment will be described.

Power system 100 according to the first modification example in the present exemplary embodiment has a basic configuration which is the same as that of power system 100 according to the previously described exemplary embodiment. Controller 102 according to the first modification example operates ventilation fan 13 when combustible gas detection sensor 20 continuously detects that concentration of combustible gas is first concentration or higher concentration during a first period of time, while ventilation fan 13 is stopped. Thereafter, controller 102 is configured to control a stop operation for stopping ventilation fan 13 after a predetermined period of time elapses.

The configuration of power system 100 according to the first modification example is the same as the configuration of power system 100 according to the previously described exemplary embodiment, and thus, description thereof will be omitted.

### [Operation of Power System]

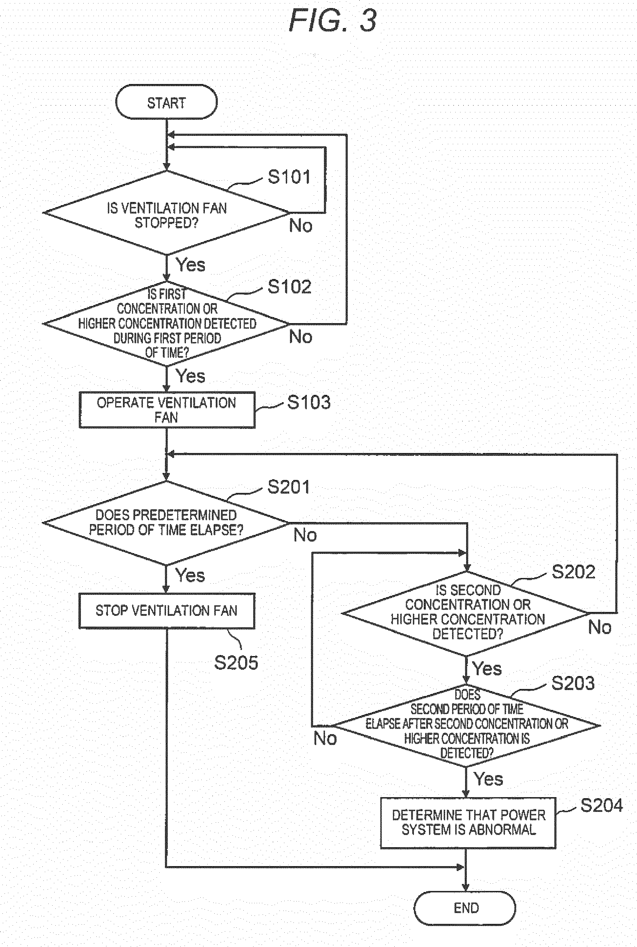

FIG. 3 is a flowchart schematically illustrating a driving operation in fuel cell system 101 of power system 100 according to the first modification example of the exemplary embodiment in the present invention.

As described above, in power system 100 according to the first modification example, controller 102 operates ventilation fan 13 when combustible gas detection sensor 20 continuously detects that the concentration of the combustible gas is the first concentration or higher concentration during the first period of time, while ventilation fan 13 is stopped. Thereafter, controller 102 controls the stop operation for stopping ventilation fan 13 after the predetermined period of time elapses. Hereinafter, the description will be made.

As illustrated in FIG. 3, the operation of power system 100 according to the first modification example is the same as the operation (refer to FIG. 2) of power system 100 according to the previously described exemplary embodiment until the process proceeds to Step S103. However, the subsequent operation is different.

In Step S103, after operating ventilation fan 13, controller 102 confirms whether or not the predetermined period of time elapses in Step S201. Here, for example, a starting point of the predetermined period of time may be a point of time when the ventilation fan is operated in Step S103, or may be a point of time when in Step S102, combustible gas detection sensor 20 detects the combustible gas having the first concentration or higher concentration during the first period of time.

In Step S201, when the predetermined period of time does not elapse (S201, No), in Step S202, controller 102 confirms whether or not the detected concentration of combustible gas detection sensor 20 is second concentration or higher concentration.

In Step S202, when the detected concentration of combustible gas detection sensor 20 is lower than the second concentration (S202, No), the process returns to Step S201, and controller 102 confirms whether or not the predetermined period of time elapses.

On the other hand, when combustible gas detection sensor 20 detects the combustible gas having the second concentration or higher concentration (S202, Yes), the process proceeds to Step S203, and controller 102 confirms whether or not a second period of time elapses after the combustible gas having the second concentration or higher concentration is detected in Step S202.

In Step S203, when the second period of time does not elapse after the combustible gas having the second concentration or higher concentration is detected in Step S202 (S203, No), the process returns to Step S202, and controller 102 confirms whether or not the concentration of the combustible gas detected by combustible gas detection sensor 20 is the second concentration or higher concentration.

In this case, when the concentration of the combustible gas detected by combustible gas detection sensor 20 is the second concentration or higher concentration, in Step S203, controller 102 confirms again whether or not the second period of time elapses after the combustible gas having the second concentration or higher concentration is detected. In this case, a starting point of the second period of time is a point of time when the combustible gas having the second concentration or higher concentration is detected for the first time. That is, the second period of time is a period while the combustible gas having the second concentration or higher concentration is continuously detected.

On the other hand, when the second period of time elapses after the combustible gas having the second concentration or higher concentration is detected (S203, Yes), controller 102 determines that power system 100 is abnormal in Step S204. Here, as the reason for determining that power system 100 is abnormal, it is conceivable that the combustible gas leaks from the gas pipe inside housing 12.

In Step S204, controller 102 performs a control for determining that power system 100 is abnormal. However, without being limited thereto, the present invention may adopt a configuration in which controller 102 performs a control for giving a notification that power system 100 is in an abnormal state.

The first concentration in Step S102 and the second concentration in Step S202 may be the same concentration, or may be mutually different concentration. For example, the first concentration and the second concentration are the same concentration, when only two states are indicated, such as a detection state where combustible gas detection sensor 20 detects the combustible gas having predetermined concentration or higher concentration and a non-detection state where combustible gas detection sensor 20 does not detect the combustible gas having concentration lower than the predetermined concentration.

On the other hand, when combustible gas detection sensor 20 indicates three or more states of the combustion gas concentration, or when combustible gas detection sensor 20 can continuously indicate the combustion gas concentration, the first concentration in Step S102 and the second concentration in Step S202 may be set to be the same concentration, or may be set to be mutually different concentration. When the mutually different concentration is set, the first concentration may be set to be lower than the second concentration, or may be set to be higher than the second concentration.

On the other hand, when the predetermined period of time elapses in Step S201 (Step S201, Yes), controller 102 stops ventilation fan 13 in Step S205.

According to this configuration, when combustible gas detection sensor 20 continuously detects that the concentration of the combustible gas is the first concentration or higher concentration during the first period of time, ventilation fan 13 is operated during the predetermined period of time. Therefore, the inside of housing 12 of fuel cell system 101 can be sufficiently ventilated, and ventilation fan 13 can be stopped after a small amount of exhaust gas reversely flowing into housing 12 of fuel cell system 101 from reverse flow prevention device 21 is more reliably discharged outward.

Power system 100 according to the first modification example configured in this way can also achieve the same advantageous effect as power system 100 according to the previously described exemplary embodiment.

### [Second Modification Example]

Next, a second modification example of power system 100 according to the present exemplary embodiment will be described.

Power system 100 according to the second modification example in the present exemplary embodiment has a basic configuration which is the same as that of power system 100 according to the previously described exemplary embodiment. Controller 102 according to the second modification example operates ventilation fan 13, when combustible gas detection sensor 20 continuously detects that the concentration of the combustible gas is the first concentration or higher concentration during the first period of time, while ventilation fan 13 is stopped. Thereafter, when combustible gas detection sensor 20 continuously detects that the concentration of the combustible gas is third concentration or lower concentration during a third period of time, controller 102 is configured to control a stop operation for stopping ventilation fan 13.

The configuration of power system 100 according to the second modification example is the same as the configuration of power system 100 according to the previously described exemplary embodiment, and thus, description thereof will be omitted.

### [Operation of Power System]

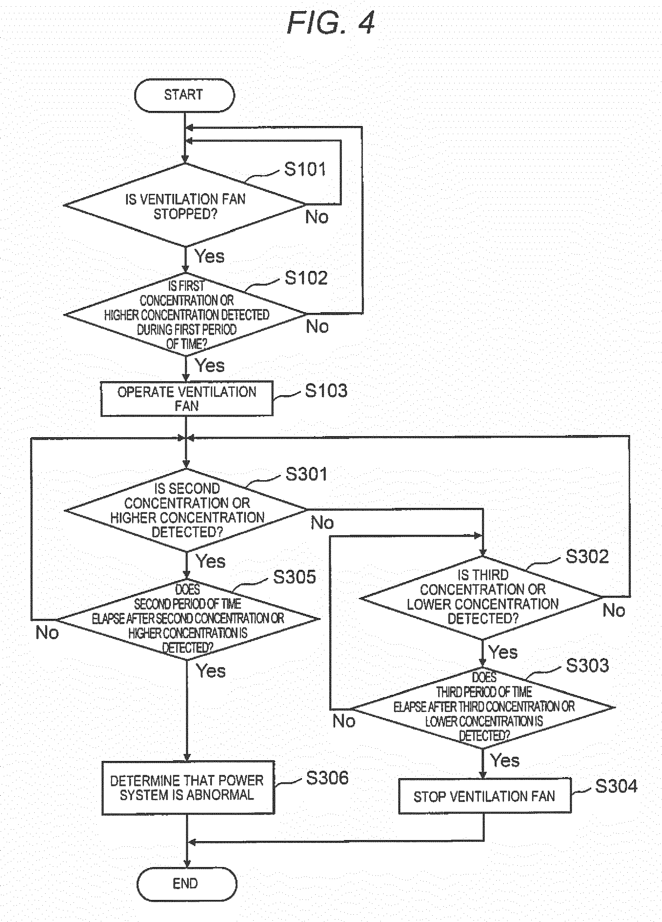

FIG. 4 is a flowchart schematically illustrating a driving operation in fuel cell system 101 of power system 100 according to the second modification example of the exemplary embodiment in the present invention.

As described above, in power system 100 according to the second modification example, while ventilation fan 13 is stopped and when combustible gas detection sensor 20 continuously detects that the concentration of the combustible gas is the first concentration or higher concentration during the first period of time, controller 102 operates ventilation fan 13. Thereafter, when combustible gas detection sensor 20 continuously detects that the concentration of the combustible gas is the third concentration or lower concentration during the third period of time, controller 102 controls the stop operation for stopping ventilation fan 13. Hereinafter, the operation will be described.

As illustrated in FIG. 4, the operation of power system 100 according to the second modification example is the same as the operation (refer to FIG. 2) of power system 100 according to the previously described exemplary embodiment until the process proceeds to Step S103. However, the subsequent operation is different.

In Step S103, after operating ventilation fan 13, the process proceeds to Step 301. Thereafter, controller 102 confirms whether or not the detected concentration of combustible gas detection sensor 20 is the second concentration or higher concentration. In Step S301, when the detected concentration of combustible gas detection sensor 20 is lower than the second concentration (S301, No), the process proceeds to Step S302, and controller 102 confirms whether or not the detected concentration of combustible gas detection sensor 20 is the third concentration or lower concentration.

In Step S302, when the detected concentration of combustible gas detection sensor 20 is higher than the third concentration (S302, No), the process returns to Step S301, and controller 102 confirms again whether or not the detected concentration of combustible gas detection sensor 20 is the second concentration or higher concentration.

On the other hand, in Step S302, when the detected concentration of combustible gas detection sensor 20 is the third concentration or lower concentration (S302, Yes), the process proceeds to Step S303, and controller 102 confirms whether or not the third period of time elapses after the combustible gas having the third concentration or lower concentration is detected in Step S302.

In Step S303, when the third period of time does not elapse after the combustible gas having the third concentration or lower concentration is detected in Step S302 (S303, No), the process returns to Step S302, and controller 102 confirms again whether or not the concentration of the combustible gas detected by combustible gas detection sensor 20 is the third concentration or lower concentration.

In this case, when the concentration of the combustible gas detected by combustible gas detection sensor 20 is the third concentration or lower concentration, in Step S303, controller 102 confirms again whether or not the third period of time elapses after the combustible gas having the third concentration or lower concentration is detected. In this case, a starting point of the third period of time is set to be a point of time when the combustible gas having the third concentration or lower concentration is started to be detected. That is, the third period of time is a period of time during which the combustible gas having the third concentration or lower concentration is continuously detected.

On the other hand, when the third period of time elapses after the combustible gas having the third concentration or lower concentration is detected (S303, Yes), controller 102 stops ventilation fan 13 in Step S304.

On the other hand, in Step S301, when combustible gas detection sensor 20 detects the combustible gas having the second concentration or higher concentration (S301, Yes), the process proceeds to Step S305, and controller 102 confirms whether or not the second period of time elapses after the combustible gas having the second concentration or higher concentration is detected in Step S301.

In Step S305, when the second period of time does not elapses after the combustible gas having the second concentration or higher concentration is detected in Step S301 (S305, No), the process returns to Step S301, and controller 102 confirms again whether or not the concentration of the combustible gas detected by combustible gas detection sensor 20 is the second concentration or higher concentration.

In this case, when the concentration of the combustible gas detected by combustible gas detection sensor 20 is the second concentration or higher concentration (S301, Yes), in Step S305, controller 102 confirms again whether or not the second period of time elapses after the combustible gas having the second concentration or higher concentration is detected. In this case, a starting point of the second period of time is set to be a point of time when the combustible gas having the second concentration or higher concentration is started to be detected. That is, the second period of time is a period of time during which the combustible gas having the second concentration or higher concentration is continuously detected.

On the other hand, when the second period of time elapses after the combustible gas having the second concentration or higher concentration is detected (S305, Yes), controller 102 determines that power system 100 is abnormal in Step S306. Here, as the reason for determining that power system 100 is abnormal, it is conceivable that the combustible gas leaks from the gas pipe inside housing 12.

In Step S306, controller 102 performs a control for determining that power system 100 is abnormal. However, without being limited thereto, the present invention may adopt a configuration in which controller 102 performs a control for giving a notification that power system 100 is in an abnormal state.

It is conceivable to set the third concentration in Step S302 to be lower than the second concentration in Step S301. It is preferable to set the third concentration to be concentration of the combustible gas which does not cause a safety problem in power system 100 and which does not affect sensitivity variations of combustible gas detection sensor 20, even if ventilation fan 13 is stopped.

According to this configuration, when combustible gas detection sensor 20 continuously detects that the concentration of the combustible gas is the first concentration or higher concentration during the first period of time, ventilation fan 13 is operated, and the inside of housing 12 in fuel cell system 101 is ventilated. In this manner, a small amount of exhaust gas reversely flowing into housing 12 in fuel cell system 101 from reverse flow prevention device 21 can be discharged outward. Ventilation fan 13 can be stopped after confirming that the concentration of the combustible gas inside housing 12 is sufficiently lowered.

Power system 100 according to the second modification example configured in this way can also achieve the same advantageous effect as power system 100 according to the previously described exemplary embodiment.

### [Third Modification Example]

Next, a third modification example of power system 100 according to the present exemplary embodiment will be described.

A power system according to the third modification example in the present exemplary embodiment has a basic configuration which is the same as that of power system 100 according to the previously described exemplary embodiment. Controller 102 according to the third modification example is configured to determine that power system 100 is abnormal, or to perform a control for giving a notification of abnormality, after the stop operation of ventilation fan 13 is repeatedly performed a predetermined number of times.

The configuration of power system 100 according to the third modification example is the same as the configuration of power system 100 according to the previously described exemplary embodiment, and thus, description thereof will be omitted.

### [Operation of Power System]

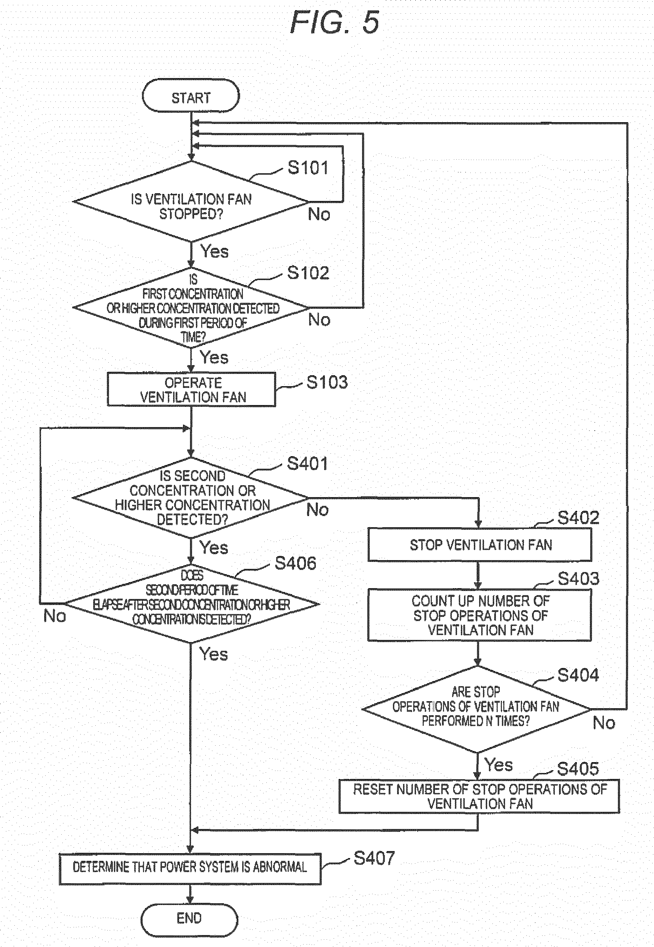

FIG. 5 is a flowchart schematically illustrating a driving operation in fuel cell system 101 of power system 100 according to the third modification example of the exemplary embodiment in the present invention.

As described above, in power system 100 according to the third modification example, controller 102 determines that power system 100 is abnormal, or performs the control for giving a notification of abnormality, after the stop operation of ventilation fan 13 is repeatedly performed the predetermined number of times. Hereinafter, the operation will be described.

As illustrated in Fig. 5, the operation of power system 100 according to the third modification example is the same as the operation (refer to FIG. 2) of power system 100 according to the previously described exemplary embodiment until the process proceeds to Step S103. However, the subsequent operation is different.

After ventilation fan 13 is operated in Step S103, the process proceeds to Step S401, and controller 102 confirms whether or not the detected concentration of combustible gas detection sensor 20 is the second concentration or higher concentration. In Step S401, when the detected concentration of combustible gas detection sensor 20 is lower than the second concentration (S401, No), the process proceeds to Step S402, and controller 102 stops ventilation fan 13.

In Step S403, controller 102 counts up the number of stop operations by which ventilation fan 13 is stopped. Here, the stop operation of ventilation fan 13 indicates an operation in which controller 102 stops ventilation fan 13 in Step S402.

Next, in Step S404, controller 102 confirms whether or not stop operations of ventilation fan 13 are performed N times which indicate the predetermined number of times. In Step S404, when the number of stop operations of ventilation fan 13 does not reach the predetermined number of N times (S404, No), controller 102 causes the process to return to Step S101.

On the other hand, in Step S404, when the number of stop operations of ventilation fan 13 reaches the predetermined number of N times (S404, Yes), controller 102 resets the number of stop operations of ventilation fan 13 in Step S405.

According to the third modification example, in Step S403, controller 102 counts up the number of stop operations of ventilation fan 13. In Step S404, controller 102 confirms whether or not the number of stop operations of ventilation fan 13 reaches the predetermined number of N times. When the number of stop operations of ventilation fan 13 reaches the predetermined number of N times, a series of controls is performed so as to reset the number of stop operations of ventilation fan 13 in Step S405. However, the present invention is not limited thereto.

For example, as the predetermined number of times, the number of times when the combustible gas is detected in Step S401 may be employed, or the number of times when the ventilation fan is operated in Step S103 may be employed. In each case, controller 102 counts up and resets each number of times in Step S403 and Step S405.

After controller 102 resets the number of stop operations of ventilation fan 13 in Step S405, controller 102 determines that power system 100 is abnormal in Step S407. Here, as the reason for determining that power system 100 is abnormal, it is conceivable that the combustible gas leaks from the gas pipe inside housing 12.

In Step S407, controller 102 performs a control for determining that power system 100 is abnormal, but the present invention is not limited thereto. Controller 102 may perform a control for giving a notification that power system 100 is in an abnormal state.

On the other hand, in Step S401, when combustible gas detection sensor 20 detects the combustible gas having the second concentration or higher concentration (S401, Yes), the process proceeds to Step S406, and in Step S406, controller 102 confirms whether or not the second period of time elapses after the combustible gas having the second concentration or higher concentration is detected.

In Step S406, when the second period of time does not elapse after the combustible gas having the second concentration or higher concentration is detected in Step S401 (S406, No), the process returns to Step S401, and controller 102 confirms again whether or not the concentration of the combustible gas detected by combustible gas detection sensor 20 is the second concentration or higher concentration.

In this case, when the concentration of the combustible gas detected by combustible gas detection sensor 20 is the second concentration or higher concentration (S401, Yes), in Step S406, controller 102 confirms again whether or not the second period of time elapses after the combustible gas having the second concentration or higher concentration is detected. In this case, a starting point of the second period of time is set to be a point of time when the combustible gas having the second concentration or higher concentration is started to be detected. That is, the second period of time is a period of time during which the combustible gas having the second concentration or higher concentration is continuously detected.

On the other hand, when the second period of time elapses after the combustible gas having the second concentration or higher concentration is detected (S406, Yes), controller 102 determines that power system 100 is abnormal in Step S407. Here, as the reason for determining that power system 100 is abnormal, it is conceivable that the combustible gas leaks from the gas pipe inside housing 12.

In Step S407, controller 102 performs a control for determining that power system 100 is abnormal, but the present invention is not limited thereto. Controller 102 may perform a control for giving a notification that power system 100 is in an abnormal state.

As described above, in power system 100 according to the third modification example, when power system 100 is abnormal (for example, the combustible gas leaking from the pipe located inside housing 12 of fuel cell system 101), a case where combustible gas detection sensor 20 detects the abnormality, ventilation fan 13 is operated and, as a result, combustible gas detection sensor 20 does not detect the combustible gas can be prevented from occurring unlimitedly and repeatedly. By enabling the correct determination of the abnormality of power system 100 or the notification of the abnormality, it is possible to achieve the same advantageous effect as power system 100 according to the previously described exemplary embodiment.

### [Fourth Modification Example]

Next, a fourth modification example of power system 100 according to the present exemplary embodiment will be described.

Power system 100 according to the fourth modification example in the present exemplary embodiment has a basic configuration which is the same as that of power system 100 according to the previously described exemplary embodiment. Controller 102 according to the fourth modification example is configured to perform a control for operating ventilation fan 13 each time a predetermined period of time elapses, even when combustible gas detection sensor 20 does not continuously detect that the concentration of the combustible gas is the first concentration or higher concentration during the first period of time.

The configuration of power system 100 according to the fourth modification example is the same as the configuration of power system 100 according to the previously described exemplary embodiment, and thus, description thereof will be omitted.

### [Operation of Power System]

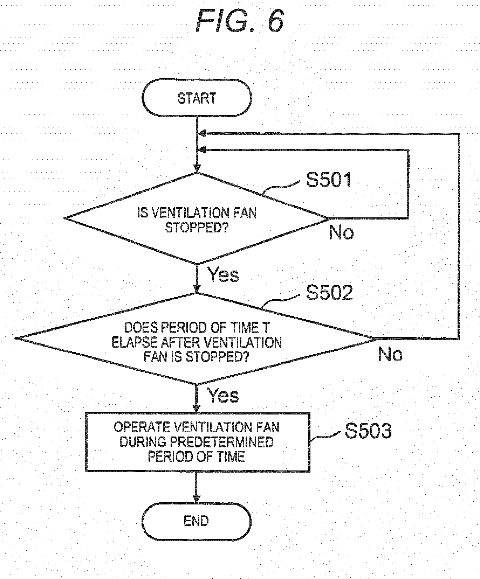

FIG. 6 is a flowchart schematically illustrating a driving operation in fuel cell system 101 of power system 100 according to the fourth modification example of the exemplary embodiment in the present invention.

As described above, in power system 100 according to the fourth modification example, controller 102 is configured to perform the control for operating ventilation fan 13 each time the predetermined period of time elapses, even when combustible gas detection sensor 20 does not continuously detect that the concentration of the combustible gas is the first concentration or higher concentration during the first period of time. Hereinafter, the operation will be described.

As illustrated in FIG. 6, in the operation of power system 100 according to the fourth modification example, controller 102 first confirms whether or not ventilation fan 13 is stopped (S501).

When ventilation fan 13 is not stopped (S501, No), controller 102 repeatedly performs the process in Step S501 until ventilation fan 13 is stopped. On the other hand, when ventilation fan 13 is stopped (S501, Yes), controller 102 causes the process to proceed to Step S502.

A case where ventilation fan 13 is in operation includes a case where ventilation fan 13 is operated to ventilate the inside of housing 12 in response to the power generating operation performed by fuel cell system 101, and a case where ventilation fan 13 is operated to ventilate the inside of housing 12 irrespective of whether or not fuel cell system 101 performs the power generating operation.

In Step S502, controller 102 confirms whether or not an elapsed period of time after ventilation fan 13 is stopped exceeds a predetermined period of time T.

When the elapsed period of time does not exceed the predetermined period of time T (S502, No), the process returns to Step S501, and controller 102 repeatedly performs the processes in Step S501 and Step S502, while ventilation fan 13 is stopped, and until the elapsed period of time after ventilation fan 13 is stopped exceeds the predetermined period of time T.

In this case, controller 102 may repeatedly perform the process in Step S502 until the elapsed period of time after ventilation fan 13 is stopped exceeds the predetermined period of time T.

Here, it is preferable that the predetermined period of time T which is the elapsed period of time after ventilation fan 13 is stopped is set to be shorter than a period of time during which a small amount of exhaust gas reversely flowing from reverse flow prevention device 21 and from combustion apparatus 103 gradually stays inside housing 12 and the concentration of the combustible gas inside housing 12 becomes concentration which affects sensitivity variations of combustible gas detection sensor 20.

On the other hand, when the elapsed period of time after ventilation fan 13 is stopped exceeds the predetermined period of time T (S502, Yes), controller 102 operates ventilation fan 13 during a predetermined period of time in Step S503.

In this case, it is preferable that controller 102 controls ventilation fan 13 so that the exhaust gas discharged from combustion apparatus 103 does not flow into housing 12 and so that static pressure of ventilation fan 13 becomes greater than discharge pressure generated when combustion fan 18 is operated.

It is preferable to set the predetermined period of time for operating ventilation fan 13 to be equal to or longer than a period of time during which air inside housing 12 can be completely discharged.

As described above, power system 100 according to the fourth modification example can discharge the air inside housing 12, while ventilation fan 13 is stopped, when combustion apparatus 103 is operated, and before a small amount of exhaust gas reversely flowing from reverse flow prevention device 21 and from combustion apparatus 103 gradually stays inside housing 12 and the concentration of the combustible gas inside housing 12 reaches concentration which affects sensitivity variations of combustible gas detection sensor 20. In this manner, it is possible to achieve the same advantageous effect as power system 100 according to the previously described exemplary embodiment.

It will be apparent from the above description that those skilled in the art can improve the present invention in various ways or can adopt other exemplary embodiments. Therefore, the above-description is to be construed as only an example, and is provided in order to propose the best mode for embodying the present invention to those skilled in the art. At least any one of details in the structure and the function can be substantially modified without departing from the gist of the present invention. Various inventions can be formed by appropriately combining multiple configuration elements disclosed in the above-described exemplary embodiment.

As described above, power system 100 according to the present exemplary embodiment includes fuel cell 11 for generating power by using fuel gas and oxidant gas, fuel cell system 101 having housing 12 for accommodating fuel cell 11, and controller 102. In addition, power system 100 includes combustion apparatus 103 and discharge passage 70 that is disposed to cause housing 12 and the air outlet of combustion apparatus 103 to communicate with each other, and that is configured so that the exhaust gas discharged from fuel cell system 101 and the exhaust gas discharged from combustion apparatus 103 are discharged to the atmosphere. In addition, power system 100 includes ventilation fan 13 serving as the air discharger for discharging the air inside fuel cell system 101 to discharge passage 70, and ventilation passage 75 that connects the air discharger and discharge passage 70 to each other in order for the air discharger to discharge the air. In addition, power system 100 includes reverse flow prevention device 21 that is disposed in discharge passage 70 or ventilation passage 75, on an upstream side from a merging site where the exhaust gas discharged from fuel cell system 101 and the exhaust gas discharged from combustion apparatus 103 merge together, in discharge passage 70, and combustible gas detection sensor 20 that is disposed inside housing 12 so as to detect the combustible gas present inside housing 12. Controller 102 operates the air discharger, while the air discharger is stopped and when combustible gas detection sensor 20 continuously detects the combustible gas having the first concentration or higher concentration during the first period of time, or in every predetermined period. Controller 102 is configured to detect that power system 100 is abnormal, or to give a notification of the abnormality, in a state where the air discharger is operated and when combustible gas detection sensor 20 continuously detects the combustible gas having the second concentration or higher concentration during the second period of time.

According to this configuration, while the air discharger for discharging the air inside fuel cell system 101 to the atmosphere through discharge passage 70 is stopped and when combustible gas detection sensor 20 continuously detects that the combustible gas having the first concentration or higher concentration is present inside housing 12 for accommodating fuel cell 11 during the first period of time, or in every predetermined period, the air discharger is operated. In this manner, the exhaust gas of combustion apparatus 103 which stays inside housing 12 after reversely flowing in discharge passage 70 and the exhaust gas reversely flowing into housing 12 can be immediately discharged outward from housing 12. In this manner, it is possible to prevent sensitivity variations of combustible gas detection sensor 20 which are caused by combustible gas detection sensor 20 being exposed for a long time due to the combustible gas contained in the exhaust gas.

Based on the detection of combustible gas detection sensor 20 for the combustible gas having the predetermined concentration or higher concentration inside housing 12, controller 102 does not determine an abnormal state of power system 100, or does not give a notification of the abnormality, after continuously detecting that the combustible gas having the first concentration or higher concentration is present inside housing 12 during the first period of time, or the air discharger is operated in every predetermined period, until combustible gas detection sensor 20 continuously detects the combustible gas having the second concentration or higher concentration inside housing 12 during the second period of time. For example, the abnormal state includes abnormality of the combustible gas leaking from the pipe located inside housing 12 of fuel cell system 101. That is, the abnormal state is detected after continuously detecting the combustible gas having the first concentration or higher concentration inside housing 12 during the first period of time or the air discharger is operated in every predetermined period, and when combustible gas detection sensor 20 continuously detects the combustible gas having the second concentration or higher concentration inside housing 12 during the second period of time. In this manner, it is possible to prevent combustible gas detection sensor 20 from detecting combustible gas contained in a small amount of exhaust gas flowing into housing 12 and causing a possibility of erroneous recognition that the combustible gas leaks from the pipe, in spite of the fact that the combustible gas does not leak from the pipe of fuel cell system 101.

Controller 102 may be configured to perform the stop operation for stopping the air discharger after a predetermined period of time elapses in a state where the air discharger is operated.

In this manner, when combustible gas detection sensor 20 continuously detects that the concentration of the combustible gas is the first concentration or higher concentration during the first period of time, or in every predetermined period, ventilation fan 13 is operated during a predetermined period of time. Accordingly, the inside of housing 12 of fuel cell system 101 can be sufficiently ventilated, and ventilation fan 13 can be stopped after a small amount of exhaust gas reversely flowing into housing 12 of fuel cell system 101 from reverse flow prevention device 21 is more reliably discharged outward.

Controller 102 may be configured to perform the stop operation for stopping the air discharger, when combustible gas detection sensor 20 continuously detects the combustible gas having the third concentration or lower concentration during the third period of time in a state where the air discharger is operated.

In this manner, ventilation fan 13 can be stopped after confirming that the concentration of the combustible gas inside housing 12 is sufficiently lowered.

Controller 102 may be configured to determine that power system 100 is abnormal or to give a notification of the abnormality, after the stop operation is repeatedly performed a predetermined number of times.

In this way, based on the detection of combustible gas detection sensor 20 for the combustible gas having the predetermined concentration or higher concentration inside housing 12,, controller 102 determines an abnormal state of power system 100 (for example, abnormality of the combustible gas leaking from the pipe inside housing 12 of fuel cell system 101) or gives a notification of the abnormality, after the stop operation for stopping the air discharger is repeatedly performed the predetermined number of times. In this manner, when power system 100 is abnormal (combustible gas leaking from the gas pipe inside fuel cell system 101), a case where combustible gas detection sensor 20 detects the abnormality, where the air discharger is operated, and where combustible gas detection sensor 20 does not detect the combustible gas can be prevented from occurring unlimitedly and repeatedly. It is possible to correctly determine that power system 100 is abnormal, or it is possible to give a notification of the abnormality.

Controller 102 may be configured to operate the air discharger each time a predetermined period of time elapses, even when combustible gas detection sensor 20 does not continuously detect the combustible gas having the first concentration or higher concentration during the first period of time.

According to this configuration, it is possible to discharge the air inside housing 12, while the air discharger is stopped and when combustion apparatus 103 is operated, and before a small amount of exhaust gas reversely flowing from reverse flow prevention device 21 and from combustion apparatus 103 gradually stays inside housing 12 and the concentration of the combustible gas inside housing 12 reaches concentration which affects sensitivity variations of combustible gas detection sensor 20.

An operation method of the power system according to the present exemplary embodiment includes a discharge step of operating the air discharger, while the air discharger is stopped and when combustible gas detection sensor 20 continuously detects the combustible gas having the first concentration or higher concentration during the first period of time, or in every predetermined period. The operation method further includes a step of determining that power system 100 is abnormal, or giving a notification of the abnormality, after the discharge step, in a state where the air discharger is operated and when combustible gas detection sensor 20 continuously detects the combustible gas having the second concentration or higher concentration during the second period of time.

According to this method, while the air discharger for discharging the air inside fuel cell system 101 to the atmosphere through discharge passage 70 is stopped and when combustible gas detection sensor 20 continuously detects that the combustible gas having the first concentration or higher concentration is present inside housing 12 for accommodating fuel cell 11 during the first period of time, or in every predetermined period, the air discharger is operated. In this manner, the exhaust gas of combustion apparatus 103 which stays inside housing 12 after reversely flowing in discharge passage 70 and the exhaust gas reversely flowing into housing 12 can be immediately discharged outward from housing 12. In this manner, it is possible to prevent sensitivity variations of combustible gas detection sensor 20 which are caused by combustible gas detection sensor 20 being exposed for a long time due to the combustible gas contained in the exhaust gas.

Based on the detection of combustible gas detection sensor 20 for the combustible gas having the predetermined concentration or higher concentration inside housing 12, controller 102 does not determine an abnormal state of power system 100, or does not give a notification of the abnormality, after continuously detecting that the combustible gas having the first concentration or higher concentration is present inside housing 12 during the first period of time, or the air discharger is operated in every predetermined period, until combustible gas detection sensor 20 continuously detects the combustible gas having the second concentration or higher concentration inside housing 12 during the second period of time. For example, the abnormal state includes abnormality of the combustible gas leaking from the pipe located inside housing 12 of fuel cell system 101. That is, the abnormal state is detected after continuously detecting the combustible gas having the first concentration or higher concentration inside housing 12 during the first period of time or the air discharger is operated in every predetermined period, and when combustible gas detection sensor 20 continuously detects the combustible gas having the second concentration or higher concentration inside housing 12 during the second period of time. In this manner, it is possible to prevent combustible gas detection sensor 20 from detecting combustible gas contained in a small amount of exhaust gas flowing into housing 12 and causing a possibility of erroneous recognition that the combustible gas leaks from the pipe, in spite of the fact that the combustible gas does not leak from the pipe of fuel cell system 101.

### INDUSTRIAL APPLICABILITY

As described above, according to the present invention, a particularly advantageous effect can be achieved in that it is possible to prevent sensitivity variations of a combustible gas detection sensor, and in that it is possible to prevent the combustible gas detection sensor from detecting combustible gas contained in a small amount of exhaust gas flowing into a housing and causing a possibility of erroneous recognition that the combustible gas leaks from a pipe, in spite of the fact that the combustible gas does not leak from the pipe of a fuel cell system. Accordingly, the present invention is advantageously applicable to a power system for supplying heat and electricity, specifically to household, commercial, stationary, and mobile power systems.

### REFERENCE MARKS IN THE DRAWINGS

- 11: fuel cell
- 11A: fuel gas passage
- 11B: oxidant gas passage
- 12: housing
- 13: ventilation fan
- 15: oxidant gas supplier
- 16, 19: air inlet
- 17: burner
- 18: combustion fan
- 20: combustible gas detection sensor
- 21: reverse flow prevention device
- 70: discharge passage
- 71: fuel gas supply passage
- 72: oxidant gas supply passage
- 73: off-fuel gas passage
- 74: off-oxidant gas passage
- 75: ventilation passage
- 76: combustion air supply passage
- 77: exhaust gas passage
- 100: power system
- 101: fuel cell system
- 102: controller
- 103: combustion apparatus
- 103a: air outlet
- 200: building

## Claims

1. A power system comprising:
a fuel cell system (101) that has a fuel cell (11) for generating power by using fuel gas and oxidant gas and a housing (12) for accommodating the fuel cell;
a controller (102);
a combustion apparatus (103);
a discharge passage (70) that is disposed so as to cause the housing and an air outlet of the combustion apparatus to communicate with each other, and that discharges exhaust gas discharged from the fuel cell system and exhaust gas discharged from the combustion apparatus to an atmosphere;
an air discharger (13) for discharging air inside the housing of the fuel cell system into the discharge passage;
a ventilation passage (75) that connects the air discharger and the discharge passage to each other for the air discharger to discharge the air;
a reverse flow prevention device (21) that is disposed in the discharge passage or the ventilation passage, on an upstream side from a merging site where the exhaust gas discharged from the fuel cell system and the exhaust gas discharged from the combustion apparatus merge together, in the discharge passage; and
a combustible gas detection sensor (20) that is disposed inside the housing so as to detect combustible gas present inside the housing,
**characterized in that**
the controller (102) operates the air discharger, when it is confirmed that the air discharger is stopped and when the combustible gas detection sensor continuously detects the combustible gas having first concentration or higher concentration during a first period of time,
wherein in a state where the air discharger is operated, the controller (102) determines that the power system is abnormal, or gives a notification of the abnormality, when the combustible gas detection sensor continuously detects the combustible gas having second concentration or higher concentration during a second period of time,
wherein in the state where the air discharger is operated, the controller (102) performs a stop operation for stopping the air discharger (i) after a predetermined period of time elapses or (ii) when the combustible gas detection sensor continuously detects the combustible gas having third concentration or lower concentration during a third period of time, and
wherein after the stop operation is repeatedly performed a predetermined number of times, the controller (102) determines that the power system is abnormal, or gives a notification of the abnormality.

2. An operation method of a power system including
a fuel cell system (101) that has a fuel cell (11) for generating power by using fuel gas and oxidant gas and a housing (12) for accommodating the fuel cell,
a controller (102),
a combustion apparatus (103),
a discharge passage (70) that is disposed so as to cause the housing and an air outlet of the combustion apparatus to communicate with each other, and that discharges exhaust gas discharged from the fuel cell system and exhaust gas discharged from the combustion apparatus to an atmosphere,
an air discharger (13) for discharging air inside the housing of the fuel cell system into the discharge passage,
a ventilation passage (75) that connects the air discharger and the discharge passage to each other for the air discharger to discharge the air,
a reverse flow prevention device (21) that is disposed in the discharge passage or the ventilation passage, on an upstream side further from a merging site where the exhaust gas discharged from the fuel cell system and the exhaust gas discharged from the combustion apparatus merge together, in the discharge passage, and
a combustible gas detection sensor (20) that is disposed inside the housing so as to detect combustible gas present inside the housing, the operation method **characterized by** comprising:
a discharge step of operating the air discharger, when it is confirmed that the air discharger is stopped and when the combustible gas detection sensor continuously detects the combustible gas having first concentration or higher concentration during a first period of time;
a step of determining that the power system is abnormal, or giving a notification of the abnormality, after the discharge step, in a state where the air discharger is operated and when the combustible gas detection sensor continuously detects the combustible gas having second concentration or higher concentration during a second period of time;
a step of performing a stop operation for stopping the air discharger (i) after a predetermined period of time elapses or (ii) when the combustible gas detection sensor continuously detects the combustible gas having third concentration or lower concentration during a third period of time, in the state where the air discharger is operated; and
a step of determining that the power system is abnormal, or giving a notification of the abnormality, after the stop operation is repeatedly performed a predetermined number of times.

## Patentansprüche

1. Leistungssystem, mit:
einem Brennstoffzellensystem (101), das eine Brennstoffzelle (11) zur Erzeugung von Leistung unter Anwendung von Brennstoffgas und einem Oxidationsgas und ein Gehäuse (12) zur Aufnahme der Brennstoffzelle aufweist;
einer Steuerung (102);
einer Verbrennungsvorrichtung (103);
einem Ableitungsdurchgang (70), der so angeordnet ist, dass bewirkt wird, dass das Gehäuse und ein Luftauslass der Verbrennungsvorrichtung miteinander in Verbindung stehen, und der Abgas, das aus dem Brennstoffzellensystem abgegeben wird, und Abgas, das aus der Verbrennungsvorrichtung abgegeben wird, an die Atmosphäre abgibt;
einer Luftableitungseinheit (13) zum Ableiten von Luft im Inneren des Gehäuses des Brennstoffzellensystems in den Ableitungsdurchgang;
einem Belüftungsdurchgang (75), der die Luftableitungseinheit und den Ableitungsdurchgang miteinander verbindet, so dass die Luftableitungseinheit die Luft ableitet;
eine Umkehrströmungsverhinderungseinrichtung (21), die in dem Ableitungsdurchgang oder dem Belüftungsdurchgang auf einer stromaufwärtigen Seite in Bezug auf eine Zusammenführungsstelle angeordnet ist, an der das Abgas, das aus dem Brennstoffzellensystem abgegeben wird, und das Abgas, das aus der Verbrennungsvorrichtung abgegeben wird, in dem Ableitungsdurchgang zusammengeführt sind; und
einem Verbrennungsgasdetektionssensor (20), der im Inneren des Gehäuses derart angeordnet ist, dass er im Inneren des Gehäuses vorhandenes brennbares Gas erfasst,
**dadurch gekennzeichnet, dass**
die Steuerung (102) die Luftableitungseinheit aktiviert, wenn bestätigt ist, dass die Funktion der Luftableitungseinheit angehalten ist und wenn der Verbrennungsgasdetektionssensor kontinuierlich das brennbare Gas erfasst, das eine erste Konzentration oder eine dazu höhere Konzentration während einer ersten Zeitdauer hat,
wobei in einem Zustand, in welchem die Luftableitungseinheit aktiviert ist, die Steuerung (102) ermittelt, dass das Leistungssystem einen von der Norm abweichenden Zustand hat, oder eine Benachrichtigung über den von der Norm abweichenden Zustand ausgibt, wenn der Verbrennungsgasdetektionssensor kontinuierlich das brennbare Gas erfasst, das eine zweite Konzentration oder eine dazu höhere Konzentration während einer zweiten Zeitdauer hat,
wobei in dem Zustand, in welchem die Luftableitungseinheit aktiviert ist, die Steuerung (102) einen Unterbrechungsvorgang zum Anhalten der Luftableitungseinheit ausführt (i) nach Ablauf einer vorbestimmten Zeitdauer oder (ii) wenn der Verbrennungsgasdetektionssensor kontinuierlich das brennbare Gas erfasst, das eine dritte Konzentration oder eine dazu niedrigere Konzentration während einer dritten Zeitdauer hat, und
wobei nach wiederholter Ausführung gemäß einer vorbestimmten Anzahl an Wiederholungen des Unterbrechungsvorgangs, die Steuerung (102) ermittelt, dass das Leistungssystem in einem von der Norm abweichenden Zustand ist, oder eine Benachrichtigung über den von der Norm abweichenden Zustand ausgibt.

2. Betriebsverfahren für ein Leistungssystem, mit
einem Brennstoffzellensystem (101), das eine Brennstoffzelle (11) zur Erzeugung von Leistung unter Anwendung von Brennstoffgas und Oxidationsgas und ein Gehäuse (12) zur Aufnahme der Brennstoffzelle hat,
einer Steuerung (102),
einer Verbrennungsvorrichtung (103),
einem Ableitungsdurchgang (70), der so angeordnet ist, dass er bewirkt, dass das Gehäuse und ein Luftauslass der Verbrennungsvorrichtung miteinander in Verbindung stehen, und der Abgas, das aus dem Brennstoffzellensystem abgeleitet wird, und Abgas, das aus der Verbrennungsvorrichtung abgeleitet wird, an die Atmosphäre ableitet,
einer Luftableitungseinheit (13) zum Ableiten von Luft im Inneren des Gehäuses des Brennstoffzellensystems in den Ableitungsdurchgang,
einem Belüftungsdurchgang (75), der die Luftableitungseinheit und den Ableitungsdurchgang verbindet, so dass die Luftableitungseinheit die Luft ableitet,
eine Umkehrströmungsverhinderungseinrichtung (21), die in dem Ableitungsdurchgang oder dem Belüftungsdurchgang auf einer stromaufwärtigen Seite weiter von einer Zusammenführungsstelle weg angeordnet ist, an der das aus dem Brennstoffzellensystem abgeleitete Abgas und das aus der Verbrennungsvorrichtung abgeleitete Abgas in dem Ableitungsdurchgang zusammengeführt werden, und
einem Verbrennungsgasdetektionssensor (20), der im Inneren des Gehäuses derart angeordnet ist, dass brennbares Gas, das im Inneren des Gehäuses vorhanden ist, erfasst, wobei das Betriebsverfahren **dadurch gekennzeichnet ist, dass** es umfasst:
einen Ableitungsschritt zum Betreiben der Luftableitungseinheit, wenn bestätigt ist, dass die Luftableitungseinheit angehalten ist, und wenn der Verbrennungsgasdetektionssensor kontinuierlich das brennbare Gas erfasst, das eine erste Konzentration oder eine dazu höhere Konzentration während einer ersten Zeitdauer hat;
einen Schritt zur Ermittlung, dass das Leistungssystem in einem von der Norm abweichenden Zustand ist, oder zum Ausgeben einer Benachrichtigung über den von der Norm abweichenden Zustand nach dem Ableitungsschritt in einem Zustand, in welchem die Luftableitungseinheit aktiviert ist und wenn der Verbrennungsgasdetektionssensor kontinuierlich das brennbare Gas erfasst, das eine zweite Konzentration oder eine dazu höhere Konzentration während einer zweiten Zeitdauer hat;
einen Schritt zum Ausführen eines Unterbrechungsvorgangs zum Anhalten der Luftableitungseinheit (i) nach dem Ablauf einer vorbestimmten Zeitdauer oder (ii) wenn der Verbrennungsgasdetektionssensor kontinuierlich das brennbare Gas erfasst, das eine dritte Konzentration oder eine dazu niedrigere Konzentration während einer dritten Zeitdauer in dem Zustand hat, in welchem die Luftableitungseinheit aktiv ist; und
einen Schritt zum Ermitteln, dass das Leistungssystem in einem von der Norm abweichenden Zustand ist, oder zum Ausgeben einer Benachrichtigung über den von der Norm abweichenden Zustand, nachdem der Unterbrechungsvorgang entsprechend einer vorbestimmten Häufigkeit wiederholt ausgeführt worden ist.

## Revendications

1. Système de génération d'énergie comprenant :
un système de pile à combustible (101) qui comporte une pile à combustible (11) pour générer de l'énergie en utilisant un gaz combustible et un gaz oxydant, et un boîtier (12) pour recevoir la pile à combustible ;
un contrôleur (102) ;
un appareil de combustion (103) ;
un passage d'évacuation (70) qui est disposé de manière à mettre en communication le boîtier et une sortie d'air de l'appareil de combustion, et qui évacue le gaz d'échappement évacué par le système de pile à combustible et le gaz d'échappement évacué par l'appareil de combustion vers l'atmosphère ;
un évacuateur d'air (13) pour évacuer l'air présent dans le boîtier du système de pile à combustible dans le passage d'évacuation ;
un passage de ventilation (75) qui connecte l'évacuateur d'air et le passage d'évacuation entre eux pour permettre à l'évacuateur d'air d'évacuer l'air ;
un dispositif de prévention de flux inverse (21) qui est disposé dans le passage d'évacuation ou le passage de ventilation, sur un côté amont d'un site de mélange où le gaz d'échappement évacué par le système de pile à combustible et le gaz d'échappement évacué par l'appareil de combustion sont mélangés dans le passage d'évacuation ; et
un capteur de détection de gaz combustible (20) qui est disposé à l'intérieur du boîtier de manière à détecter le gaz combustible présent à l'intérieur du boîtier,
**caractérisé en ce que**
le contrôleur (102) commande l'évacuateur d'air, quand il est confirmé que l'évacuateur d'air est arrêté et quand le capteur de détection de gaz combustible détecte en continu que le gaz combustible a une concentration supérieure ou égale à une première concentration durant une première période,
dans lequel, dans un état où l'évacuateur d'air est commandé, le contrôleur (102) détermine que le système de génération d'énergie est anormal, ou envoie une notification de l'anomalie, quand le capteur de détection de gaz combustible détecte en continu que le gaz combustible a une concentration supérieure ou égale à une deuxième concentration durant une deuxième période,
dans lequel, dans l'état où l'évacuateur d'air est commandé, le contrôleur (102) met en oeuvre une opération d'arrêt pour arrêter l'évacuateur d'air (i) après qu'une période prédéterminée s'est écoulée ou (ii) quand le capteur de détection de gaz combustible détecte en continu que le gaz combustible a une concentration inférieure ou égale à une troisième concentration durant une troisième période, et
dans lequel, après que l'opération d'arrêt est mise en oeuvre de manière répétée un nombre de fois prédéterminé, le contrôleur (102) détermine que le système de génération d'énergie est anormal, ou envoie une notification de l'anomalie.

2. Procédé de commande d'un système de génération d'énergie comprenant
un système de pile à combustible (101) qui comporte une pile à combustible (11) pour générer de l'énergie en utilisant un gaz combustible et un gaz oxydant, et un boîtier (12) pour recevoir la pile à combustible,
un contrôleur (102),
un appareil de combustion (103),
un passage d'évacuation (70) qui est disposé de manière à mettre en communication le boîtier et une sortie d'air de l'appareil de combustion, et qui évacue le gaz d'échappement évacué par le système de pile à combustible et le gaz d'échappement évacué par l'appareil de combustion vers l'atmosphère,
un évacuateur d'air (13) pour évacuer l'air présent dans le boîtier du système de pile à combustible dans le passage d'évacuation,
un passage de ventilation (75) qui connecte l'évacuateur d'air et le passage d'évacuation entre eux pour permettre l'évacuation de l'air par l'évacuateur d'air,
un dispositif de prévention de flux inverse (21) qui est disposé dans le passage d'évacuation ou le passage de ventilation, sur un côté amont plus éloigné d'un site de mélange où le gaz d'échappement évacué par le système de pile à combustible et le gaz d'échappement évacué par l'appareil de combustion se mélangent, dans le passage d'évacuation, et
un capteur de détection de gaz combustible (20) qui est disposé à l'intérieur du boîtier de manière à détecter le gaz combustible présent à l'intérieur du boîtier, le procédé de commande étant
**caractérisé en ce qu'**il comprend :
une étape d'évacuation consistant à commander l'évacuateur d'air, quand il est confirmé que l'évacuateur d'air est arrêté et quand le capteur de détection de gaz combustible détecte en continu que le gaz combustible a une concentration supérieure ou égale à une première concentration durant une première période ;
une étape de détermination du fait que le système de génération d'énergie est anormal, ou d'envoi d'une notification de l'anomalie, après l'étape d'évacuation, dans un état où l'évacuateur d'air est commandé et quand le capteur de détection de gaz combustible détecte en continu que le gaz combustible a une concentration supérieure ou égale à une deuxième concentration durant une deuxième période ;
une étape de mise en oeuvre d'une opération d'arrêt pour arrêter l'évacuateur d'air (i) après qu'une période prédéterminée s'est écoulée ou (ii) quand le capteur de détection de gaz combustible détecte en continu que le gaz combustible a une concentration inférieure ou égale à une troisième concentration durant une troisième période, dans l'état où l'évacuateur d'air est commandé ; et
une étape de détermination du fait que le système de génération d'énergie est anormal, ou d'envoi d'une notification de l'anomalie, après que l'opération d'arrêt est mise en oeuvre de manière répétée un nombre de fois prédéterminé.
